# EUROPEAN PATENT APPLICATION

(11) **EP 4 845 173 A1**
(43) Date of publication of application: **25.11.2026**
(21) Application number: 26169124.0
(22) Date of filing: 30.03.2026
(51) Int. Cl.: H04N 23/698, H04N 23/45, H04N 23/51, H04N 23/90

(54) **CAMERA ASSEMBLY**

(30) Priority: 19.05.2025 CN 202520982130 U
(71) Applicant: Sharetronic Data Technology Co., Ltd., Shenzhen, Guangdong 518000 (CN)
(72) Inventor: Geng, Kangming, Shenzhen City, Guangdong Province, 518000 (CN); Yi, Zhou, Shenzhen City, Guangdong Province, 518000 (CN); Qu, Zhaotian, Shenzhen City, Guangdong Province, 518000 (CN); Liu, Jianfei, Shenzhen City, Guangdong Province, 518000 (CN)
(74) Representative: Petraz, Gilberto Luigi

(57) **Abstract**

The present disclosure provides a camera assembly (100). The camera assembly is configured to be fixed on one side of a light-transmitting carrier (200). The camera assembly includes a first camera structure (10) and a second camera structure (20), an imaging acquisition end of the first camera structure (11) and an imaging acquisition end of the second camera structure (21) face opposite directions. The camera assembly provided in the present disclosure can capture image signals from different directions, thereby enabling the acquisition of images of objects located in different orientations.

## Description

### CROSS-REFERENCE TO RELATED APPLICATIONS

This application claims priority to and the benefits of Chinese Application Patent Application No. 202520982130.3, filed on May 19, 2025, the entire disclosure of which is hereby incorporated by reference.

### TECHNICAL FIELD

The present disclosure relates to camera technology, and in particular relates to a camera assembly.

### BACKGROUND

Current surveillance camera systems on the market typically can only capture objects in a single direction, failing to meet application scenarios that require simultaneous acquisition of image information from different directions.

### SUMMARY

Embodiments of the present disclosure provide a camera assembly, to solve at least part of the aforementioned technical problems.

The present disclosure provides a camera assembly, which is configured to be fixed on one side of a carrier. The camera assembly may include a first camera structure and a second camera structure. An imaging acquisition end of the first camera structure and an imaging acquisition end of the second camera structure face opposite directions.

The camera assembly provided in the present disclosure can capture image signals from different directions, thereby enabling the acquisition of images of objects located in different orientations.

### BRIEF DESCRIPTION OF THE ACCOMPANYING DRAWINGS

To describe the technology solutions in the embodiments of the present disclosure more clearly, the following briefly introduces the accompanying drawings required for describing the embodiments. Obviously, the accompanying drawings in the following description show merely at least one embodiment of the present disclosure, those of ordinary skilled in the art may also obtain other drawings based on these drawings without any creative efforts.
FIG. 1 illustrates a schematic structural view of a camera assembly in accordance with at least one embodiment of the present disclosure from one view.
FIG. 2 illustrates a schematic structural view of the camera assembly as shown in FIG. 1 from another view.
FIG. 3 illustrates a schematic view of the camera assembly fixed to a light-transmitting carrier in accordance with at least one embodiment of the present disclosure.
FIG. 4 illustrates an exploded view of the camera assembly in accordance with at least one embodiment of the present disclosure.
FIG. 5 illustrates a cross-sectional view of the camera assembly as shown in FIG. 1 taken along a line I-I'.
FIG. 6 illustrates a schematic structural view of a light board, a second camera structure, and a second circuit board as shown in FIG. 4.
FIG. 7 illustrates a schematic view of an exploded structure of the housing as shown in FIG. 4 from one view.
FIG. 8 illustrates a schematic view of the exploded structure of the housing as shown in FIG. 4 from another view.
FIG. 9 illustrates a schematic structural view of a rotating body as shown in FIG. 4.
FIG. 10 illustrates a side view of a partial structure of a rotating portion as shown in FIG. 7.
FIG. 11 illustrates a bottom view of the partial structure of the rotating portion as shown in FIG. 7.
FIG. 12 illustrates a schematic view of a first housing part and a fixing part as shown in FIG. 7 from one view.
FIG. 13 illustrates a partial cross-sectional view of the camera assembly as shown in FIG. 1 take along a line II-II'.
FIG. 14 illustrates a schematic view of the first housing part and the fixing part as shown in FIG. 7 from another view.
FIG. 15 illustrates a schematic structural view of a second engagement part as shown in FIG. 7.
FIG. 16 illustrates another partial cross-sectional view of the camera assembly as shown in FIG. 1 take along a line II-II'.
FIG. 17 illustrates a top view of the first housing part and the fixing part as shown in FIG. 4.
FIG. 18 illustrates a schematic view of projections of a first stop portion, a second stop portion, a rotation center line, a plate body, a rotating part sidewall, and a third sub-connecting part on a rotation plane in at least one embodiment of the present disclosure.
FIG. 19 illustrates a schematic structural view of the shielding member shown in FIG. 4.
FIG. 20 illustrates a cross-sectional structural view of the shielding member and the sliding groove in accordance with at least one embodiment of the present disclosure.
FIG. 21 illustrates a schematic structural view of a first circuit board, a first camera structure, a display assembly, a speaker, and a peripheral port as shown in FIG. 4.

### DETAILED DESCRIPTION OF ILLUSTRATED EMBODIMENTS

In order to enable those skilled in the technical field to better understand the solutions of the present disclosure, the technical solutions in the embodiments of the present disclosure will be described clearly and completely in the following with reference to the accompanying drawings in the embodiments of the present disclosure. Obviously, the described embodiments are only a part of the embodiments of the present disclosure, rather than all of them. Based on the embodiments in the the present disclosure, all other embodiments obtained by those of ordinary skill in the art without creative efforts shall fall within the protection scope of the present disclosure.

It should be understood that the terms "first", "second", etc. in the specification and claims of the present disclosure and the accompanying drawings are configured to distinguish different objects and are not configured to describe a particular order. In addition, the terms "include", "include" and "have", and any variations thereof, are intended to cover non-exclusive inclusion. For example, a process, method, system, product or device including a series of steps or units is not limited to the listed steps or units, but optionally also can include steps or units that are not listed, or optionally can include other steps or units that are inherent to the process, method, product or apparatus.

"Embodiments" in the present disclosure means that particular features, structures, or characteristics described with reference to the embodiments may be included in at least one embodiment of the present disclosure. The presence of the phrase at various places in the specification does not necessarily referring to the same embodiment, nor is it a separate or alternative embodiment that is mutually exclusive of other embodiments. It is understood by those skilled in the art, both explicitly and implicitly, that the embodiments described in the present disclosure may be combined with other embodiments.

The embodiments of the present disclosure provide a camera assembly, which is configured to be fixed on one side of a carrier.

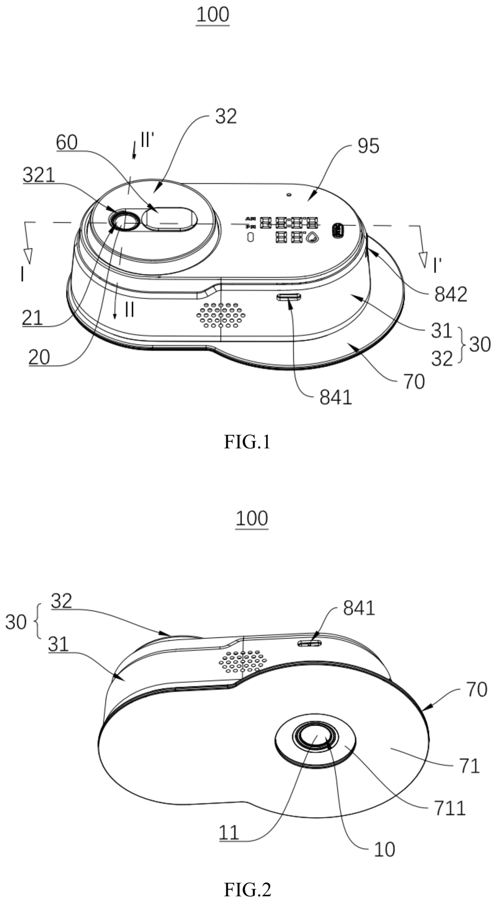

Please refer to FIGS. 1 and 2. FIG. 1 illustrates a schematic structural view of a camera assembly 100 in accordance with at least one embodiment of the present disclosure from one view. FIG. 2 illustrates a schematic structural view of the camera assembly 100 as shown in FIG. 1 from another view. As shown in FIGS. 1 and 2, the camera assembly 100 may include a first camera structure 10 and a second camera structure 20. A first imaging acquisition end 11 of the first camera structure 10 and a second imaging acquisition end 21 of the second camera structure 20 face opposite directions.

Therefore, the camera assembly 100 can capture image signals from different directions, thereby acquiring images of objects located in different orientations.

The first camera structure 10 and the second camera structure 20 may be located on a same side or different sides of the carrier.

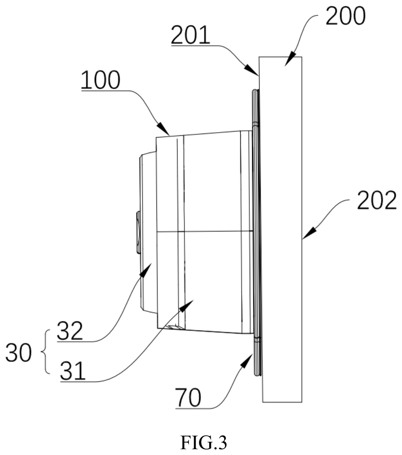

In at least one embodiment, the carrier is a light-transmitting carrier. Please referring to FIG. 3, FIG. 3 illustrates a schematic view of the camera assembly 100 fixed to a light-transmitting carrier 200 in accordance with at least one embodiment of the present disclosure. As shown in FIG. 3, the camera assembly 100 is configured to be fixed on a first light-transmitting side 201 of the light-transmitting carrier 200. The first camera structure 10 is configured to capture images of objects on a second light-transmitting side 202 of the light-transmitting carrier 200 through the light-transmitting carrier 200, and the second camera structure 20 is configured to capture images of objects on the first light-transmitting side 201 of the light-transmitting carrier 200. The second light-transmitting side 202 and the first light-transmitting side 201 are opposite to each other.

By mounting the camera assembly 100 on the light-transmitting carrier 200 and arranging the first imaging acquisition end 11 of the first camera structure 10 and the second imaging acquisition end 21 of the second camera structure 20 to face opposite sides of the light-transmitting carrier 200, images of objects on both sides of the light-transmitting carrier 200 can be captured, enabling multi-directional and multi-angle shooting and simultaneous acquisition of image information from different directions and angles.

In at least one embodiment, the light-transmitting carrier 200 may be made of light-transmitting inorganic non-metallic materials, such as glass, quartz, transparent ceramics, sapphire, etc. The glass may include glass for building windows, vehicle windows, aquariums, or other application fields. When the light-transmitting carrier 200 is glass for building windows and the camera assembly 100 is installed on the light-transmitting carrier 200, the camera assembly 100 can simultaneously monitor both indoor and outdoor environments.

In at least one embodiment, the light-transmitting carrier 200 may be made of other light-transmitting materials, such as light-transmitting polymer materials. The light-transmitting polymer materials may include polycarbonate (PC), polymethyl methacrylate (PMMA), epoxy resin, etc.

In other embodiments, the carrier may also be a non-light-transmitting carrier.

The carrier may be any other object on which the camera assembly 100 can be mounted, such as streetlights, surveillance poles, etc.

The first imaging acquisition end 11 may refer to an end of the first camera structure 10 where its optical lens group is located. The second imaging acquisition end 21 may refer to an end of the second camera structure 20 where its optical lens group is located.

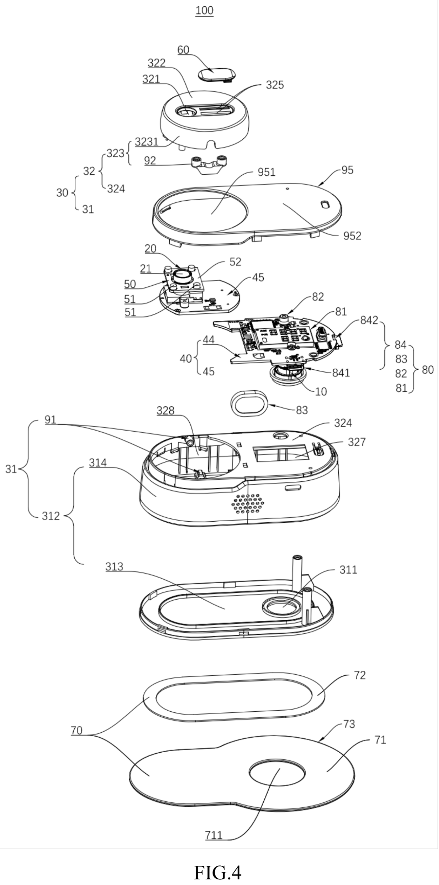

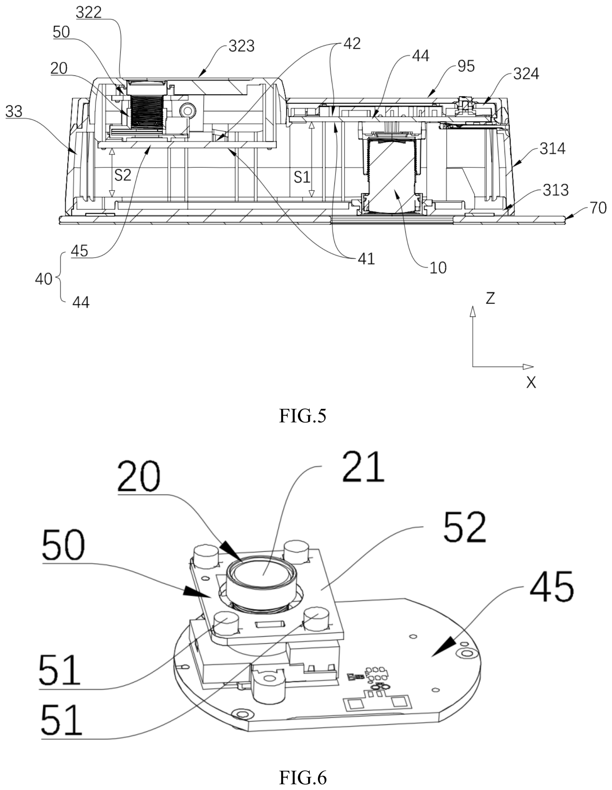

Please refer to FIGS. 1, 2, 4, and 5. FIG. 4 illustrates an exploded view of the camera assembly 100 in accordance with at least one embodiment of the present disclosure. FIG. 5 illustrates a cross-sectional view of the camera assembly 100 as shown in FIG. 1 taken along a line I-I'. In at least one embodiment, as shown in FIGS. 1, 2, 4, and 5, the camera assembly 100 may further include a housing 30. The housing 30 may include a first housing part 31 and a second housing part 32. The first housing part 31 and the second housing part 32 are connected. The first housing part 31 and the second housing part 32 cooperatively form a receiving space 33. The first housing part 31 is configured to be fixed on the first light-transmitting side 201 and defines a first lens hole 311 facing the light-transmitting carrier 200. The second housing part 32 is located on one side of the first housing part 31 facing away from the light-transmitting carrier 200 and defines a second lens hole 321.

The first camera structure 10 is located within the receiving space 33. The first imaging acquisition end 11 of the first camera structure 10 faces the first lens hole 311. The first camera structure 10 is configured to capture images of objects on the second light-transmitting side 202 of the light-transmitting carrier 200 through the first lens hole 311.

The second camera structure 20 is located within the receiving space 33. The second imaging acquisition end 21 of the second camera structure 20 faces the second lens hole 321. The second camera structure 20 is configured to capture images of objects on the first light-transmitting side 201 of the light-transmitting carrier 200 through the second lens hole 321.

The housing 30 can provide protection for the first camera structure 10 and the second camera structure 20.

In at least one embodiment, as shown in FIGS. 4 and 5, the camera assembly 100 may further include a circuit board 40. The circuit board 40 is located within the receiving space 33. The circuit board 40 may include a first side 41 and a second side 42 opposite to each other. The first camera structure 10 and the second camera structure 20 are respectively mounted on the first side 41 and the second side 42 of the circuit board 40. The circuit board 40 may at least include an image processing circuit (not shown in the FIGS. 4 and 5), which is configured to process image signals captured by the first camera structure 10 and the second camera structure 20.

In at least one embodiment, the first camera structure 10 may include a first optical lens group, a first lens driving mechanism, and a first image sensor. The first optical lens group is configured to converge light from the second light-transmitting side 202 onto the first image sensor, enabling the first image sensor to generate a first image signal based on the light signal from the second light-transmitting side 202 and transmit the first image signal to the image processing circuit. The first lens driving mechanism is configured to drive the first optical lens group to move and adjust the position of the first optical lens group for focusing.

In at least one embodiment, the second camera structure 20 includes a second optical lens group, a second lens driving mechanism, and a second image sensor. The second optical lens group is configured to converge light from the first light-transmitting side 201 onto the second image sensor, enabling the second image sensor to generate a second image signal based on the light signal from the first light-transmitting side 201 and transmit the second image signal to the image processing circuit. The second lens driving mechanism is configured to drive the second optical lens group to move and adjust the position of the second optical lens group for focusing.

The image processing circuit can perform noise reduction, color correction, dynamic range optimization, sharpening and detail enhancement, distortion and perspective correction, image compression and encoding, and other processing on the first image signal and the second image signal.

The first lens driving mechanism, the first image sensor, the second lens driving mechanism, and the second image sensor may be arranged on the circuit board 40.

In at least one embodiment, the circuit board 40 may further include a power management circuit, and the power management circuit is configured to supply power to components of the first camera structure 10, components of the second camera structure 20, and components on the circuit board 40.

In at least one embodiment, as shown in FIG. 5, the circuit board 40 may include a first circuit board 44 and a second circuit board 45 spaced from the first circuit board 44. An arrangement direction of the first camera structure 10 and the first circuit board 44, as well as an arrangement direction of the second camera structure 20 and the second circuit board 45, are both parallel to a first direction. The first direction is an arrangement direction of the first housing part 31 and the second housing part 32 (a Z direction as shown in FIG. 5). Therefore, a Z-direction space of the camera assembly 100 can be rationally used.

The first imaging acquisition end 11 of the first camera structure 10 is mounted in the first lens hole 311, and one end of the first camera structure 10 opposite to the first imaging acquisition end 11 is connected to the first circuit board 44. The first circuit board 44 is fixed to the first housing part 31.

The second imaging acquisition end 21 of the second camera structure 20 is mounted in the second lens hole 321, and one end of the second camera structure 20 opposite to the second imaging acquisition end 21 is connected to the second circuit board 45. The second circuit board 45 is fixed to the second housing part 32.

By mounting the first camera structure 10 and the first circuit board 44, as well as the second camera structure 20 and the second circuit board 45, on different housing parts, the assembly and subsequent maintenance of the camera structures and their corresponding circuit boards are facilitated.

In at least one embodiment, as shown in FIG. 5, in the first direction, a distance between the first circuit board 44 and the first housing part 31 (as shown by S1 in FIG. 5) is greater than a distance between the second circuit board 45 and the first housing part 31 (as shown by S2 in FIG. 5). This ensures that one side of the first circuit board 44 close to the first lens hole 311 has sufficient space for the first camera structure 10, and one side of the second circuit board 45 close to the second lens hole 321 has sufficient space for the second camera structure 20. By staggering the arrangement of the first circuit board 44 and the second circuit board 45 in the first direction, the design space required for the camera assembly 100 in the first direction can be reduced.

In other embodiments, in the first direction, the distance between the first circuit board 44 and the first housing part 31 may be less than or equal to the distance between the second circuit board 45 and the first housing part 31.

In at least one embodiment, the first circuit board 44 may include the aforementioned image processing circuit, second image sensor, second lens driving mechanism, and power management circuit. The second circuit board 45 is electrically connected to the first circuit board 44 and may include the aforementioned first image sensor and first lens driving mechanism. The second circuit board 45 is at least configured to transmit the image signals captured by the second camera structure 20 to the image processing circuit on the first circuit board 44, i.e., to transmit the second image signal generated by the second image sensor to the image processing circuit on the first circuit board 44 for processing.

In other embodiments, the second circuit board 45 may include the aforementioned image processing circuit, first image sensor, first lens driving mechanism, and power management circuit. The first circuit board 44 is electrically connected to the second circuit board 45 and may include the aforementioned first image sensor and first lens driving mechanism. The first circuit board 44 is at least configured to transmit the image signals captured by the first camera structure 10 to the image processing circuit on the second circuit board 45, i.e., to transmit the first image signal generated by the first image sensor to the image processing circuit on the second circuit board 45 for processing.

In at least one embodiment, the aforementioned image processing circuit may include a first image processing circuit and a second image processing circuit. The first circuit board 44 may include the first image sensor, the first lens driving mechanism, and the first image processing circuit, and the first image processing circuit is configured to process the image signals captured by the first camera structure 10, i.e., to process the first image signal generated by the first image sensor. The second circuit board 45 may include the second image sensor, the second lens driving mechanism, and the second image processing circuit, and the second image processing circuit is configured to process the image signals captured by the second camera structure 20, i.e., to process the second image signal generated by the second image sensor.

Here, the power management circuit may be arranged on the first circuit board 44 or the second circuit board 45.

In at least one embodiment, the power management circuit may include a first power management circuit and a second power management circuit, and the first power management circuit and the second power management circuit are respectively arranged on the first circuit board 44 and the second circuit board 45.

In at least one embodiment, the circuit board 40 is a complete circuit board.

Please refer to FIGS. 4 to 6. FIG. 6 illustrates a schematic structural view of a light board 50, a second camera structure 20, and a second circuit board 45 as shown in FIG. 4. In at least one embodiment, as shown in FIGS. 4 to 6, the second housing part 32 may include a first light-transmitting area 322. The camera assembly 100 may further include a light board 50 located within the receiving space 33. The light board 50 is sleeved on the second camera structure 20, and a light-emitting side of the light board 50 faces the first light-transmitting area 322. The light rays emitted by the light board 50 passes through the first light-transmitting area 322 to illuminate the side of the second housing part 32 away from the first housing part 31, i.e., the light rays emitted by the light board 50 passes through the first light-transmitting area 322 to illuminate the first light-transmitting side 201 of the light-transmitting carrier 200.

By arranging the light board 50, when the ambient light on the first light-transmitting side 201 is insufficient, the light emitted by the light board 50 can be used to supplement light for the second camera structure 20.

In at least one embodiment, as shown in FIG. 6, the light board 50 may include at least one light-emitting component 51 and a base board 52. Each light-emitting component 51 is located on one side of the base board 52 close to the second lens hole 321, and a light-emitting side of the light board 50 is a side where the at least one light-emitting component 51 is located. The at least one light-emitting component 51 may include an infrared lamp and/or a visible light lamp. The base board 52 is connected to the second circuit board 45.

In at least one embodiment, the light board 50 may include at least two light-emitting components 51. For example, as shown in FIG. 6, the light board 50 may include four light-emitting components 51, and the four light-emitting components 51 are evenly distributed around the second imaging acquisition end 21 of the second camera structure 20.

Here, the light board 50, the second camera structure 20, and the second circuit board 45 may all be fixed to the second housing part 32, enabling modularization of the light board 50, the second camera structure 20, the second circuit board 45 and the second housing part 32, which facilitates the assembly of these components with the first housing part 31 and subsequent maintenance work.

When the light-emitting components 51 include infrared lamps, the infrared lamps can supplement light for the second camera structure 20 when the ambient light on the first light-transmitting side 201 is insufficient. Since infrared light is invisible to the human eye, it does not cause interference. For example, when the camera assembly 100 is installed on the inner side of a building window glass, the second camera structure 20 can capture images under the supplementary light of the infrared lamps at night without affecting the user's sleep. Another example is when the camera assembly 100 is installed on a surveillance pole on a road. During nighttime surveillance, the infrared light does not interfere with the driver's vision, avoiding traffic accidents.

When the light-emitting components 51 include visible light lamps, the camera assembly 100 can still capture clear images under insufficient ambient light on the first light-transmitting side 201 with the supplementary light from the visible light lamps.

In at least one embodiment, a processor of the camera assembly 100 is electrically connected to the light board 50. The processor is configured to control the light-emitting components 51 to emit light when the brightness value of the ambient light on the first light-transmitting side 201 is below a preset brightness value, thereby supplementing light for the second camera structure 20.

In at least one embodiment, the at least one light-emitting component 51 includes infrared lamps and visible light lamps. The camera assembly 100 may include an ambient light sensor for detecting the brightness value of the ambient light on the first light-transmitting side 201. The camera assembly 100 has a nighttime working mode and a daytime working mode. The processor of the camera assembly 100 is configured to obtain the brightness value of the ambient light detected by the ambient light sensor. When the detected brightness value of the ambient light is below a first preset brightness value and the camera assembly 100 is in the nighttime working mode, the processor controls the infrared lamps to emit light and the visible light lamps not to emit light, thereby supplementing light for the second camera structure 20 with the infrared lamps. The processor is also configured to control the infrared lamps not to emit light and the visible light lamps to emit light when the detected brightness value of the ambient light is below a second preset brightness value and the camera assembly 100 is in the daytime working mode, thereby supplementing light for the second camera structure 20 with the visible light lamps.

In at least one embodiment, the camera assembly 100 may include a clocker for obtaining current time information. The processor can determine the working mode of the camera assembly 100 based on the time information obtained by the clocker. For example, when the current time is 1:00 AM, the processor determines that the current working mode is the nighttime working mode; when the current time is 10:00 AM, the processor determines that the current working mode is the daytime working mode.

Here, the processor and the image processing circuit may be integrated into one processing chip, and the processing chip can be located on the first circuit board 44 or the second circuit board 45. Alternatively, the processor and the image processing circuit may be two independent processing chips, and the two independent processing chips can be located on the first circuit board 44 or the second circuit board 45.

In at least one embodiment, as shown in FIG. 4, the first housing part 31 may include a housing body 312 and a first connecting part 91. The second housing part 32 may include a rotating part 323 and a fixing part 324. The fixing part 324 is fixedly connected to the first housing part 31, for example, the fixing part 324 is fixedly connected to the housing body 312. The rotating part 323 may include a rotating body 3231 and a second connecting part 92. The first connecting part 91 is rotatably connected to the second connecting part 92. The second camera structure 20 is fixedly connected to the rotating body 3231. A rotation of the rotating part 323 relative to the first housing part 31 drives the second camera structure 20 to rotate relative to the first housing part 31, thereby changing a viewing angle of the second camera structure 20, which allows the viewing angle of the second camera structure 20 to be adjusted without changing the mounting position of the camera assembly 100.

The second lens hole 321 is defined on the rotating body 3231, and the first lens hole 311 is defined on the housing body 312.

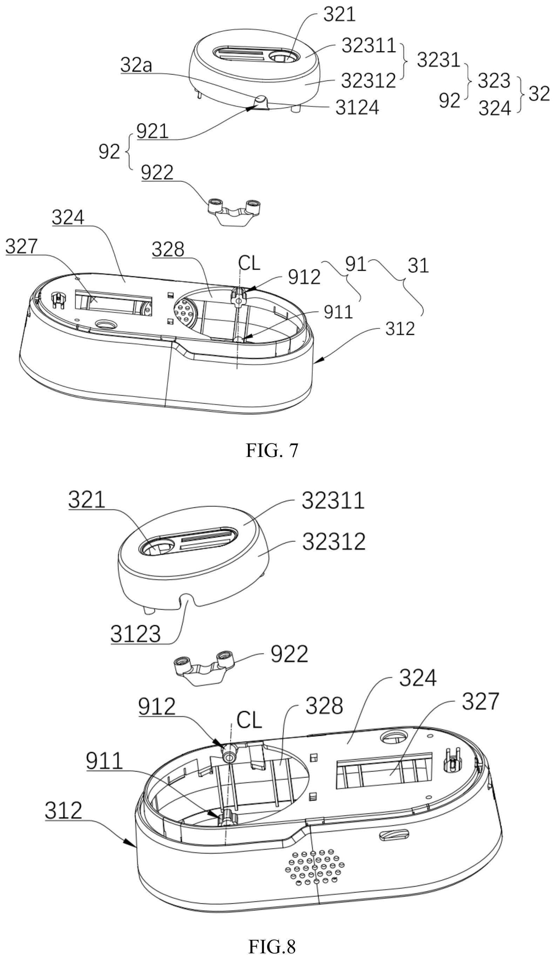

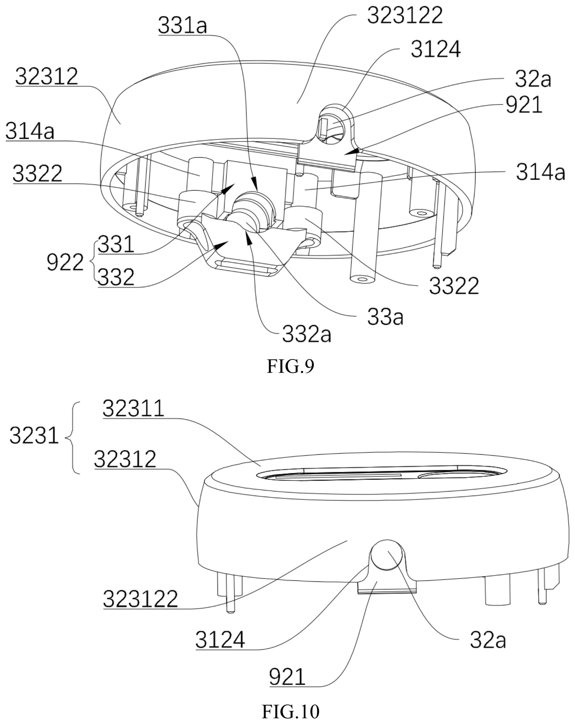

Please refer to FIGS. 7 to 9. FIG. 7 illustrates a schematic view of an exploded structure of the housing 30 as shown in FIG. 4 from one view. FIG. 8 illustrates a schematic view of the exploded structure of the housing 30 as shown in FIG. 4 from another view. FIG. 9 illustrates a schematic structural view of a rotating body 3231 as shown in FIG. 4. In at least one embodiment, as shown in FIGS. 7 to 9, the first connecting part 91 may include a first sub-connecting part 911 and a second sub-connecting part 912, and the second connecting part 92 may include a third sub-connecting part 921 and a fourth sub-connecting part 922. The third sub-connecting part 921 and the fourth sub-connecting part 922 are spaced apart on the rotating body 3231. The third sub-connecting part 921 is rotatably connected to the first sub-connecting part 911, and the fourth sub-connecting part 922 is rotatably connected to the second sub-connecting part 912. A rotation center line CL of the first sub-connecting part 911 and the third sub-connecting part 921 coincides with a rotation center line CL of the second sub-connecting part 912 and the fourth sub-connecting part 922. The second camera structure 20 is fixedly connected to the rotating body 3231. The rotation of the rotating part 323 relative to the first housing part 31 drives the second camera structure 20 to rotate relative to the first housing part 31, thereby changing the viewing angle of the second camera structure 20.

Here, the first sub-connecting part 911, the second sub-connecting part 912, the third sub-connecting part 921, and the fourth sub-connecting part 922 can all rotate around the rotation center line CL.

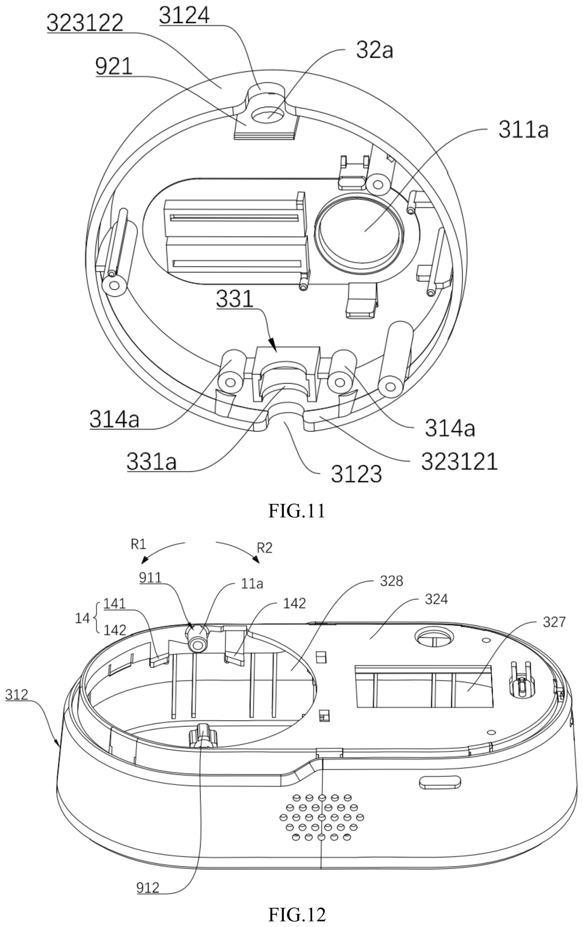

Please refer to FIGS. 7 to 11. FIG. 10 illustrates a side view of a partial structure of a rotating part 323 as shown in FIG. 7. FIG. 11 illustrates a bottom view of the partial structure of the rotating part 323 as shown in FIG. 7. In at least one embodiment, as shown in FIGS. 7 to 11, the rotating body 3231 may include a plate body 32311. The third sub-connecting part 921 and the fourth sub-connecting part 922 are located on a first side of the plate body 32311 along a thickness direction of the plate body 32311. The second camera structure 20 is located on the first side of the plate body 32311 and fixedly connected to the plate body 32311. A surface of a second side of the plate body 32311 is configured to be pressed to rotate the plate body 32311 relative to the first housing part 31, thereby driving the second camera structure 20 to rotate relative to the first housing part 31. The second side of the plate body 32311 is opposite to the first side of the plate body 32311, and the first side of the plate body 32311 faces the receiving space 33 and the second side of the plate body 32311 faces away from the receiving space 33.

Here, by arranging the third sub-connecting part 921, the fourth sub-connecting part 922, and the second camera structure 20 on the first side of the plate body 32311, the space occupied by the camera assembly 100 can be reduced. Additionally, pressing the second side of the plate body 32311 enables to rotate the rotating part 323, so as to further rotate the second camera structure 20, making the adjustment of the shooting angle very convenient.

Here, the second camera structure 20 can be fixedly connected to the plate body 32311 through screw connection, riveting, snap-fit, adhesion, or other methods.

Please refer to FIG. 12. FIG. 12 illustrates a schematic view of a first housing part 31 and a fixing part 324 as shown in FIG. 7 from one view. In at least one embodiment, as shown in FIG. 12, the first sub-connecting part 911 may include a first shaft part 11a located on the housing body 312. As shown in FIGS. 7, 9 to 11, the third sub-connecting part 921 defines a first shaft hole 32a. The first shaft part 11a is inserted into the first shaft hole 32a and can rotate within the first shaft hole 32a. Alternatively, the third sub-connecting part 921 defines a first groove on its surface close to the first housing part 31. The first shaft part 11a is inserted into the first groove and can rotate within the first groove. The first shaft part 11a and the first shaft hole 32a or the first groove can be clearance-fit to facilitate the rotation of the first shaft part 11a within the first shaft hole 32a or the first groove.

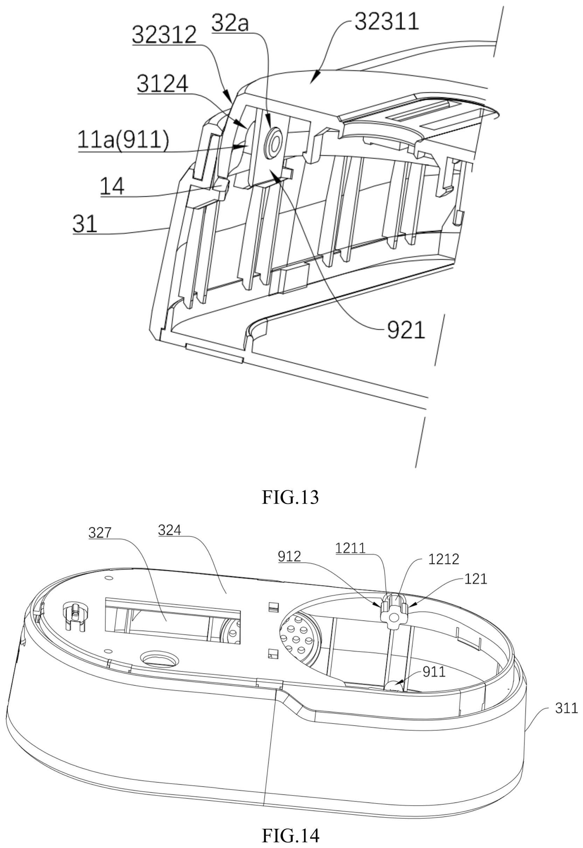

Please refer to FIG. 13. FIG. 13 illustrates a partial cross-sectional view of the camera assembly 100 as shown in FIG. 1 take along a line II-II'. FIG. 13 illustrates a connection relationship between the first sub-connecting part 911 and the third sub-connecting part 921 in at least one embodiment. In at least one embodiment, as shown in FIG. 13, the first sub-connecting part 911 is the first shaft part 11a, and the third sub-connecting part 921 defines the first shaft hole 32a. The first shaft part 11a is inserted into the first shaft hole 32a.

The rotation center line CL of the first shaft part 11a and the third sub-connecting part 921 is the central axis of the first shaft part 11a, and the the central axis of the first shaft part 11a passes through the center of the first shaft hole 32a or the first groove.

An axial direction of the first shaft part 11a may be substantially parallel to a large surface of the plate body 32311, meaning the axial direction of the first shaft part 11a can be completely parallel or slightly inclined. That is, an angle between the axial direction of the first shaft part 11a and the large surface of the plate body 32311 is greater than or equal to 0° and less than or equal to a preset angle, such as 10°-15°. The large surface of the plate body 32311 refers to the surface of the plate body 32311 with the largest area.

Here, the first shaft part 11a and the first housing part 31 can be integrally formed or fixedly connected through screw connection, riveting, snap-fit, adhesion, welding, or other methods.

In other embodiments, the first sub-connecting part 911 is a second shaft hole defined on the first housing part 31 or a second groove defined on a surface of the first housing part 31 close to the third sub-connecting part 921. The third sub-connecting part 921 may include a second shaft part, and the second shaft part is inserted into the second shaft hole or the second groove and can rotate within the second shaft hole or the second groove. The second shaft part and the second shaft hole or the second groove can be clearance-fit to facilitate the rotation of the second shaft part within the second shaft hole or the second groove.

The axial direction of the second shaft part may be substantially parallel to the large surface of the plate body 32311, meaning that the axial direction of the second shaft part can be completely parallel or slightly inclined to the large surface of the plate body 32311. That is, the angle between the axial direction of the second shaft part and the large surface of the plate body 32311 is greater than or equal to 0° and less than or equal to a preset angle, such as 10°-15°.

The second shaft part and the plate body 32311 can be integrally formed or fixedly connected through screw connection, riveting, snap-fit, adhesion, welding, or other methods.

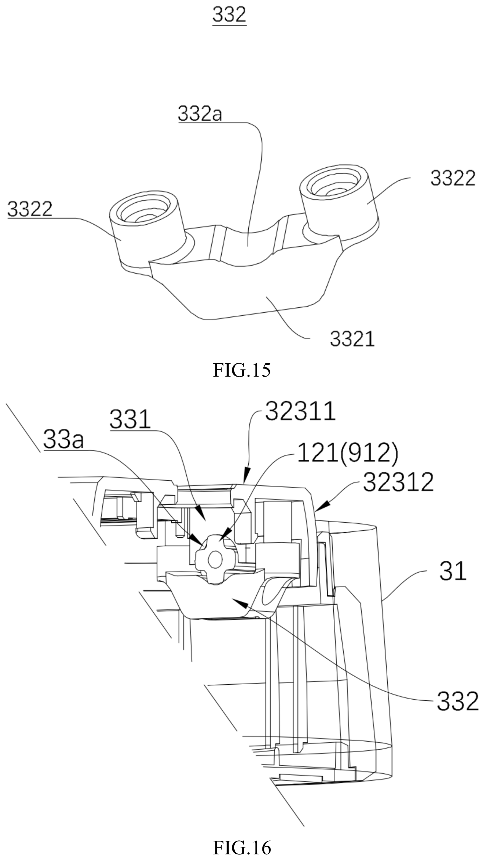

Please refer to FIG. 14. FIG. 14 illustrates a schematic view of the first housing part 31 and the fixing part 324 as shown in FIG. 7 from another view. In at least one embodiment, as shown in FIG. 14, the second sub-connecting part 912 may include a third shaft part 121 located on the housing body 312. Please refer to FIGS. 9 and 15. FIG. 15 illustrates a schematic structural view of a second engagement part 332 as shown in FIG. 7. As shown in FIGS. 9 and 15, the fourth sub-connecting part 922 may include a first engagement part 331 and a second engagement part 332. The first engagement part 331 and the second engagement part 332 are fixedly connected to the first side of the plate body 32311. A surface of the first engagement part 331 away from the plate body 32311 is recessed toward the plate body 32311 to form a first arc-shaped groove 331a. A surface of the second engagement part 332 facing the plate body 32311 is recessed away from the plate body 32311 to form a second arc-shaped groove 332a. The second arc-shaped groove 332a is located on one side of the first arc-shaped groove 331a away from the plate body 32311. Groove walls of the first arc-shaped groove 331a and the second arc-shaped groove 332a cooperatively form an annular cavity 33a. The third shaft part 121 is inserted through the annular cavity 33a and can rotate around the axis of the third shaft part 121 relative to the first engagement part 331 and the second engagement part 332. The annular cavity 33a can be a closed ring or an open ring. The third shaft part 121 is in contact with a cavity wall of the annular cavity 33a.

The tight fit between the first engagement part 331 and the second engagement part 332 can increase a damping force when the first engagement part 331 and the second engagement part 332 rotate relative to the third shaft part 121, ensuring resistance during rotation. After the external force is removed, the constraint and the damping effect of the annular cavity 33a together enable the first engagement part 331 and the second engagement part 332 to achieve self-locking after rotation, stabilizing the angle between the plate body 32311 and the first housing part 31.

The rotation center line CL of the third shaft part 121 and the fourth sub-connecting part 922 is a central axis of the third shaft part 121, and the central axis of the third shaft part 121 passes through the center of the annular cavity 33a.

An axial direction of the third shaft part 121 may be substantially parallel to the large surface of the plate body 32311, meaning that the axial direction of the third shaft part 121 can be completely parallel or slightly inclined to the large surface of the plate body 32311. That is, the angle between the axial direction of the first shaft part 11a and the large surface of the plate body 32311 is greater than or equal to 0° and less than or equal to a preset angle, such as 10°-15°.

In at least one embodiment, as shown in FIGS. 9 and 15, the second engagement part 332 may include a main part 3321 and at least one mounting part 3322 connected to the main part 3321. The at least one mounting part 3322 is fixedly connected to the plate body 32311, thereby fixing the main part 3321 to the plate body 32311. The main part 3321 is located on one side of the first engagement part 331 away from the plate body 32311. A surface of the main part 3321 facing the plate body 32311 is recessed away from the plate body 32311 to form a second arc-shaped groove 332a. In at least one embodiment, there are two mounting parts 3322, and the two mounting parts 3322 are distributed on opposite sides of the second arc-shaped groove 332a, ensuring more stable and balanced fastening force between the main part 3321 and the plate body 32311.

In at least one embodiment, as shown in FIGS. 9 and 15, the first side of the plate body 32311 may include at least one mounting post 314a. Each mounting post 314a extends along a direction perpendicular to the plate body 32311 and defines a screw hole. Each mounting part 3322 also defines a screw hole. By screwing a screw into the screw holes of the mounting part 3322 and the mounting post 314a, the mounting post 314a and the mounting part 3322 can be locked and fixed, thereby fixing the second engagement part 332 to the plate body 32311.

In other embodiments, the second engagement part 332 can also be fixedly connected to the plate body 32311 through riveting, snap-fit, adhesion, or other methods.

In at least one embodiment, the first engagement part 331 is integrally formed with the plate body 32311. In other embodiments, the first engagement part 331 can be fixedly connected to the plate body 32311 through screw connection, riveting, snap-fit, adhesion, or other methods.

In at least one embodiment, the first engagement part 331 and the second engagement part 332 can be made of abrasion-resistant polymer materials to reduce contact stress of the first engagement part 331 and the second engagement part 332 with the third shaft part 121, minimizing abrasion and extending service life. Abrasion-resistant polymer materials may include polyoxymethylene (POM).

In other embodiments, the first engagement part 331 and the second engagement part 332 can also be made of other materials.

Please refer to FIG. 16. FIG. 16 illustrates another partial cross-sectional view of the camera assembly 100 as shown in FIG. 1 take along a line II-II'. FIG. 16 illustrates the connection relationship between the second sub-connecting part 912 and the fourth sub-connecting part 922 in at least one embodiment. In at least one embodiment, as shown in FIG. 16, the second sub-connecting part 912 is the third shaft part 121, and the fourth sub-connecting part 922 includes the first engagement part 331 and the second engagement part 332. The first engagement part 331 and the second engagement part 332 cooperatively form the annular cavity 33a, and the third shaft part 121 is inserted through the annular cavity 33a and can rotate relative to the annular cavity 33a.

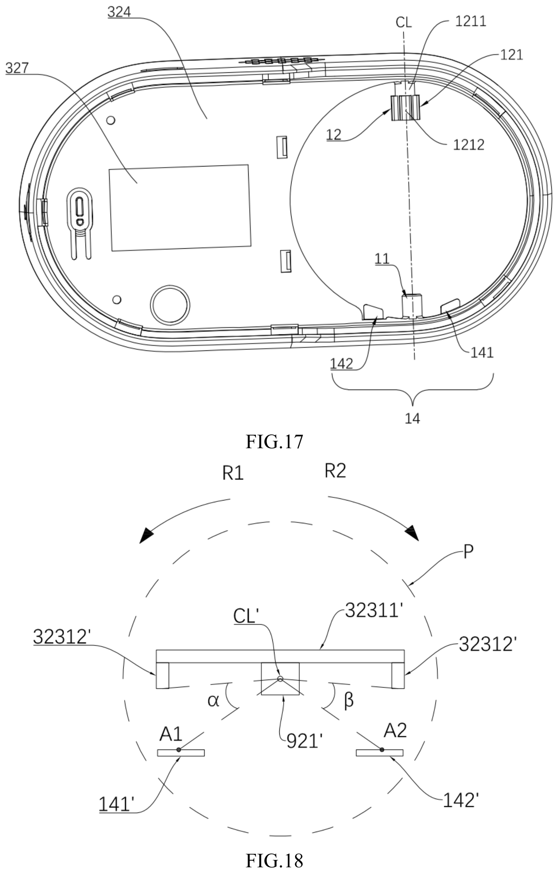

Please refer to FIGS. 14 and 17. FIG. 17 illustrates a top view of the first housing part 31 and the fixing part 324 as shown in FIG. 4. In at least one embodiment, as shown in FIGS. 14 and 17, the third shaft part 121 of the second sub-connecting part 912 may include a shaft body 1211 and at least two positioning parts 1212. The at least two positioning parts 1212 are distributed along a circumference of the shaft body 1211, and each positioning part 1212 extends along the axial direction of the shaft body 1211.

In at least one embodiment, the shaft body 1211 and the at least two positioning parts 1212 are integrated. Compared to the third shaft portion 121 being cylindrical, i.e., having a peripheral surface that is a regular circle, by arranging the at least two positioning parts 1212 circumferentially on the shaft body 1211, the peripheral surface of the third shaft portion 121 is not a regular circle but rather a ring with uneven structure, which enables the molten plastic material to form multiple flow channels during injection molding, reducing the material thickness and thereby avoiding issues such as shrinkage and deformation caused by excessive material thickness during injection, thereby ensuring that the third shaft portion 121, when inserted into the annular cavity 33a, remains tightly pressed against the cavity wall of the annular cavity 33a, and further maintaining the damping force during rotation and better achieving the self-locking function. Additionally, compared to the third shaft portion 121 being cylindrical (where the entire peripheral surface of the third shaft portion 121 is in contact with the cavity wall of the annular cavity 33a), the outward-protruding positioning parts 1212 arranged circumferentially on the shaft body 1211 ensure that only the outer surfaces of the positioning parts 1212 contact the cavity wall of the annular cavity 33a, while the surfaces of the shaft body 1211 between adjacent positioning parts 1212 do not contact the cavity wall, reducing the contact area between the third shaft portion 121 and the annular cavity 33a, increasing the pressure and thereby improving the pressing effect between the cavity wall of the annular cavity 33a and the third shaft portion 121.

In at least one embodiment, as shown in FIGS. 7 to 11, the rotating body 3231 may further include a rotating side wall 32312. The rotating side wall 32312 is connected to a periphery of the plate body 32311. The rotating side wall 32312 is located on the first side of the plate body 32311, forming an accommodating space with the plate body 32311. At least portions of the third sub-connecting part 921 and the fourth sub-connecting part 922 are located within the accommodating space. As shown in FIGS. 9 to 11, the rotating side wall 32312 may include a first side wall 323121 and a second side wall 323122. The first side wall 323121 is closer to the fourth sub-connecting part 922 and the second sub-connecting part 912 compared to the second side wall 323122, while the second side wall 323122 is closer to the third sub-connecting part 921 and the first sub-connecting part 911 compared to the first side wall 323121.

When the second sub-connecting part 912 includes the third shaft portion 121 and the first sub-connecting part 911 includes the first shaft portion 11a, the first side wall 323121 is close to the third shaft portion 121, and the second side wall 323122 is close to the first shaft portion 11a.

In at least one embodiment, as shown in FIGS. 8 and 11, a portion of a surface of the first side wall 323121 facing away from the plate body 32311 is recessed toward the plate body 32311 to form a first notch 3123. The second sub-connecting part 912 includes the third shaft portion 121. The third shaft portion 121 is inserted through the first notch 3123 and the annular cavity 33a and can rotate relative to the first engagement part 331, the second engagement part 332, and the first side wall 323121.

Here, the first notch 3123 forms an avoidance channel, allowing the third shaft portion 121 to be inserted into the annular cavity 33a along the axial direction.

In at least one embodiment, the first notch 3123 surrounds a region of the shaft body 1211 where the positioning parts 1212 are not provided.

By configuring the first notch 3123 to cooperate with the shaft body 1211, an additional pivot point is effectively added, enabling more balanced load distribution and thereby improving the stability of the rotation of the rotating part 323 relative to the first housing part 31.

In at least one embodiment, as shown in FIGS. 9 to 11, a portion of a surface of the second side wall 323122 facing away from the plate body 32311 is recessed toward the plate body 32311 to form a second notch 3124. As shown in FIG. 13, the first shaft portion 11a passes through the second notch 3124 and is inserted into the first shaft hole 32a or the first groove, and can rotate relative to the third sub-connecting part 921 and the second side wall 323122.

The second notch 3124 forms an avoidance channel, allowing the first shaft portion 11a to be inserted into the first shaft hole 32a or the first groove along the axial direction.

By configuring the second notch 3124 to cooperate with the first shaft portion 11a, an additional pivot point is effectively added, enabling more balanced load distribution and thereby further improving the stability of the rotation of the rotating part 323 relative to the first housing part 31.

In at least one embodiment, the second sub-connecting part 912 is the third shaft portion 121, and the fourth sub-connecting part 922 defines a third shaft hole or a surface of the fourth sub-connecting part 922 close to the first housing part 31 defines a third groove. The third shaft portion 121 is inserted into the third shaft hole or the third groove and can rotate within the third shaft hole or the third groove. The third shaft portion 121 and the third shaft hole or the third groove may be clearance-fit.

In other embodiments, the second sub-connecting part 912 is a fourth shaft hole defined on the first housing part 31 or a fourth groove defined on a surface of the first housing part 31 close to the fourth sub-connecting part 922. The fourth sub-connecting part 922 includes a fourth shaft portion, and the fourth shaft portion is inserted into the fourth shaft hole or the fourth groove and can rotate within the fourth shaft hole or the fourth groove. The fourth shaft portion and the fourth shaft hole or the fourth groove may be clearance-fit.

In at least one embodiment, the first sub-connecting part 911 is the first shaft portion 11a, and the third sub-connecting part 921 includes a third engagement part and a fourth engagement part, the third engagement part and the fourth engagement part are fixedly connected to the first side of the plate body 32311. A surface of the third engagement part facing away from the plate body 32311 is recessed toward the plate body 32311 to form a third arcuate groove, and a surface of the fourth engagement part facing the plate body 32311 is recessed in a direction away from the plate body 32311 to form a fourth arcuate groove. The fourth arcuate groove is located on one side of the third arcuate groove facing away from the plate body 32311. Groove walls of the third arcuate groove and the fourth arcuate groove cooperatively form an annular cavity. The first shaft portion 11a is inserted through the annular cavity and can rotate around the axis of the first shaft portion 11a relative to the third engagement part and the fourth engagement part. The annular cavity may be a closed ring or an open ring. The third shaft portion 121 is in contact with the cavity wall of the annular cavity.

In at least one embodiment, as shown in FIG. 4, the first housing part 31 may include a cover plate 313 and a middle side plate 314. The middle side plate 314 is connected to a periphery of the cover plate 313 and is located on a first side of the cover plate 313 along a thickness direction of the cover plate 313. The second housing part 32 is located on one side of the middle side plate 314 facing away from the cover plate 313. A second side of the cover plate 313 along the thickness direction of the cover plate 313 is configured for fixed connection with the first light-transmitting side 201 of the light-transmitting carrier 200. The first lens hole 311 is defined on the cover plate 313. The second housing part 32 is located on the side of the middle side plate 314 facing away from the cover plate 313, forming the aforementioned receiving space 33 with the middle side plate 314 and the cover plate 313.

As shown in FIG. 4, the fixed portion 324 is fixedly connected to a portion of an edge of the middle side plate 314 facing away from the cover plate 313. The fixed portion 324, the middle side plate 314, and the cover plate 313 together form an accommodating space with an opening 328. The first sub-connecting part 911 and the second sub-connecting part 912 are located on the middle side plate 314 near the opening 328. A portion of the rotating side wall 32312 facing away from the plate body 32311, the third sub-connecting part 921, and the fourth sub-connecting part 922 extend into the opening 328. The rotating part 323, the fixed portion 324, the middle side plate 314, and the cover plate 313 together form the aforementioned receiving space 33.

The fixed portion 324 and the middle side plate 314 may be integrally formed or connected by means such as screwing, riveting, or snapping.

In at least one embodiment, the projections of the first camera structure 10 and the second camera structure 20 on the cover plate 313 are spaced apart or partially overlap, which can reduce a design space of the camera assembly 100 in a second direction (as shown by a X direction in FIG. 5), facilitating miniaturization of the camera assembly 100. The second direction is parallel to a large surface of the cover plate 313 and perpendicular to the first direction. The large surface of the cover plate 313 is a surface with a largest area of the cover plate 313.

In at least one embodiment, as shown in FIGS. 12 and 17, the first housing part 31 may further include a stop portion 14. The stop portion 14 is located on the housing body 312. The stop portion 14 is located on a rotation path of the rotating body 3231. When the rotating body 3231 rotates relative to the first housing part 31 around the rotation center line CL to a preset position, the stop portion 14 abuts against the rotating body 3231 to prevent further rotation of the rotating body 3231, thereby limiting further rotation of the second camera structure 20. Thus, the stop portion 14 can limit an end of a travel of the rotating body 3231 during its rotation around the rotation center line CL, thereby restricting an angle of rotation of the rotating body 3231 relative to the first housing part 31 and limiting an angle of rotation of the second camera structure 20 relative to the first housing part 31.

By providing the stop portion 14, excessive rotation of the rotating part 323 can be avoided, preventing the camera structure 20 or other components on the first side of the plate body 32311 from being exposed, which would affect aesthetics. Additionally, by providing the stop portion 14, issues such as poor shooting angles caused by excessive rotation of the second camera structure 20 can be avoided.

In at least one embodiment, the projection of the stop portion 14 on a plane of the plate body 32311 partially overlaps with the projection of the rotating side wall 32312 on the plane of the plate body 32311. When the rotating side wall 32312 rotates around the rotation center line CL, the rotating side wall 32312 will abut against the stop portion 14 and cannot continue rotating in the same direction.

In at least one embodiment, as shown in FIGS. 12 and 17, the stop portion 14 may include a first stop portion 141 and a second stop portion 142. The first stop portion 141 and the second stop portion 142 are located on opposite sides of the rotation center line CL. The preset positions include a first preset position and a second preset position. When the rotating body 3231 rotates relative to the first housing part 31 in a first rotation direction (as shown by the R1 direction in FIG. 12) to the first preset position, the first stop portion 141 abuts against the rotating body 3231 to prevent further rotation in the first rotation direction. When the rotating body 3231 rotates relative to the first housing part 31 in a second rotation direction (as shown by the R2 direction in FIG. 12) to the second preset position, the second stop portion 142 abuts against the rotating body 3231 to prevent further rotation in the second rotation direction. The second rotation direction is opposite to the first rotation direction.

By positioning the first stop portion 141 and the second stop portion 142 on opposite sides of the rotation center line CL, it ensures that when the rotating body 3231 rotates in opposite directions, the second camera structure 20 or other components on the first side of the plate body 32311 can be prevented from being exposed, and issues such as poor shooting angles caused by excessive rotation of the second camera structure 20 can be avoided.

In at least one embodiment, the projection of the first stop portion 141 on the plane of the plate body 32311 partially overlaps with the projection of the rotating side wall 32312 on the plane of the plate body 32311. When the rotating side wall 32312 rotates around the rotation center line CL in the first rotation direction, it will abut against the first stop portion 141 and cannot continue rotating in the first rotation direction.

In at least one embodiment, the projection of the second stop portion 142 on the plane of the plate body 32311 partially overlaps with the projection of the rotating side wall 32312 on the plane of the plate body 32311. When the rotating side wall 32312 rotates around the rotation center line CL in the second rotation direction, it will abut against the second stop portion 142 and cannot continue rotating in the second rotation direction.

In at least one embodiment, when the rotating body 3231 rotates to a third preset position, the large surface of the plate body 32311 is parallel to the large surface of the cover plate 313. The large surface of the cover plate 313 is the surface with the largest area of the cover plate 313.

Please refer to FIG. 18. FIG. 18 illustrates a schematic view of projections of a first stop portion 141, a second stop portion 142, a rotation center line CL, a plate body 32311, a rotating part sidewall 32312, and a third sub-connecting part 921 on a rotation plane P in at least one embodiment of the present disclosure. FIG. 18 illustrates the projections of the plate body 32311, the rotating side wall 32312, and the third sub-connecting part 921 on the rotation plane P when the rotating body 3231 is rotated to the third preset position. The rotation plane P is perpendicular to the rotation center line CL.

In at least one embodiment, as shown in FIG. 18, the projection of the first stop portion 141 on the rotation plane P is a first projection 141', the projection of the second stop portion 142 on the rotation plane P is a second projection 142', the projection of the rotation center line CL on the rotation plane P is a third projection CL', the projection of the plate body 32311 on the rotation plane P when rotated to the third preset position is a fourth projection 32311', the projection of the rotating side wall 32312 on the rotation plane P when rotated to the third preset position is a fifth projection 32312', and the projection of the third sub-connecting part 921 on the rotation plane P when rotated to the third preset position is a sixth projection 921'.

When the rotating body 3231 rotates to the first preset position, the rotating side wall 32312 abuts against a first region of the first stop portion 141. The projection of the first region on the rotation plane P is a seventh projection A1 (as shown in FIG. 18). The angle between the line connecting the end of the fifth projection 32312' close to the first projection 141' and the third projection CL' and the line connecting the seventh projection A1 and the third projection CL' is a first angle α. Therefore, when the rotating body 3231 rotates from the third preset position in the first rotation direction, the maximum rotation angle of the rotating body 3231 is the first angle α, meaning the maximum rotation angle of the second camera structure 20 is the first angle α, at which point the rotating body 3231 is rotated to the first preset position.

When the rotating body 3231 rotates to the second preset position, the rotating side wall 32312 abuts against a second region of the second stop portion 142. The projection of the second region on the rotation plane P is an eighth projection A2 (as shown in FIG. 18). The angle between the line connecting the end of the fifth projection 32312' close to the second projection 142' and the third projection CL' and the line connecting the eighth projection A2 and the third projection CL' is a second angle β. Thus, when the rotating body 3231 rotates from the third preset position in the second rotation direction, the maximum rotation angle of the rotating body 3231 is the second angle β, meaning the maximum rotation angle of the second camera structure 20 is the second angle β, at which point the rotating body 3231 is rotated to the second preset position.

Therefore, by adjusting the first angle α and the second angle β, the maximum rotation angle of the rotating part 323 in the first rotation direction and the maximum rotation angle in the second rotation direction can be adjusted.

The first angle α and the second angle β may be equal or unequal. In at least one embodiment, the first angle α and the second angle β are greater than or equal to 10° and less than or equal to 15°. In other embodiments, the first angle α and the second angle β may be other values.

In at least one embodiment, the first stop portion 141 and the second stop portion 142 are both adjacent to the first sub-connecting part 911 and located on opposite sides of the first sub-connecting part 911 (as shown in FIGS. 12 and 17). That is, the distance between the first stop portion 141 and the first sub-connecting part 911 is smaller than the distance between the first stop portion 141 and the second sub-connecting part 912, the distance between the second stop portion 142 and the first sub-connecting part 911 is smaller than the distance between the second stop portion 142 and the second sub-connecting part 912. Alternatively, the first stop portion 141 and the second stop portion 142 are both adjacent to the second sub-connecting part 912 and located on opposite sides of the second sub-connecting part 912. That is, the distance between the first stop portion 141 and the second sub-connecting part 912 is smaller than the distance between the first stop portion 141 and the first sub-connecting part 911, and the distance between the second stop portion 142 and the second sub-connecting part 912 is smaller than the distance between the second stop portion 142 and the first sub-connecting part 911. In other embodiments, one of the first stop portion 141 and the second stop portion 142 is adjacent to the first sub-connecting part 911, and the other of the first stop portion 141 and the second stop portion 142 is adjacent to the second sub-connecting part 912, with the first stop portion 141 and the second stop portion 142 located on opposite sides of the rotation center line of the first sub-connecting part 911 and the second sub-connecting part 912.

In at least one embodiment, the camera assembly 100 may further include a driving assembly (not shown in the figures). The driving assembly is connected to the third sub-connecting part 921 and/or the fourth sub-connecting part 922. The driving assembly is configured to drive the third sub-connecting part 921 and the fourth sub-connecting part 922 to rotate relative to the first housing part 31 around the rotation center line CL, thereby driving the rotating body 3231 and the second camera structure 20 to rotate relative to the first housing part 31 around the rotation center line CL. Thus, the camera assembly 100 can intelligently and automatically adjust the viewing angle of the second camera structure 20.

In at least one embodiment, the driving assembly may include a motor. The output shaft of the motor is fixedly connected to the third sub-connecting part 921 or the fourth sub-connecting part 922. When the motor operates, the output shaft drives the third sub-connecting part 921 or the fourth sub-connecting part 922 to rotate relative to the first housing part 31, thereby driving the rotating body 3231 and the second camera structure 20 to rotate relative to the first housing part 31. A housing of the motor may be fixed to the first housing part 31, which provides support for the motor.

In at least one embodiment, the driving assembly may include two motors. The output shaft of one motor is fixedly connected to the third sub-connecting part 921, and the output shaft of the other motor is fixedly connected to the fourth sub-connecting part 922. When the two motors operate, their output shafts work at the same speed and synchronously drive the third sub-connecting part 921 and the fourth sub-connecting part 922 to rotate relative to the first housing part 31, thereby driving the rotating body 3231 and the second camera structure 20 to rotate relative to the first housing part 31.

The output shaft of the motor may be directly connected to the third sub-connecting part 921 or the fourth sub-connecting part 922, or connected via a reduction device. The reduction device may include a gear reducer, a worm gear reducer, etc.

In at least one embodiment, the driving assembly may include a cylinder assembly and a transmission assembly. The transmission assembly is connected to the cylinder assembly and the first sub-connecting part 911 or the third sub-connecting part 921. The transmission assembly converts the linear motion of the cylinder assembly into rotational motion, driving the first sub-connecting part 911 or the third sub-connecting part 921 to rotate relative to the first housing part 31, thereby driving the rotating body 3231 and the second camera structure 20 to rotate relative to the first housing part 31. The transmission assembly may include a crank-slider mechanism, a gear-rack mechanism, a sprocket-chain mechanism, a yoke mechanism, etc.

In other embodiments, the driving assembly may be another type of driving device, as long as it can drive the third sub-connecting part 921 and/or the fourth sub-connecting part 922 to perform rotational motion relative to the first housing part 31.

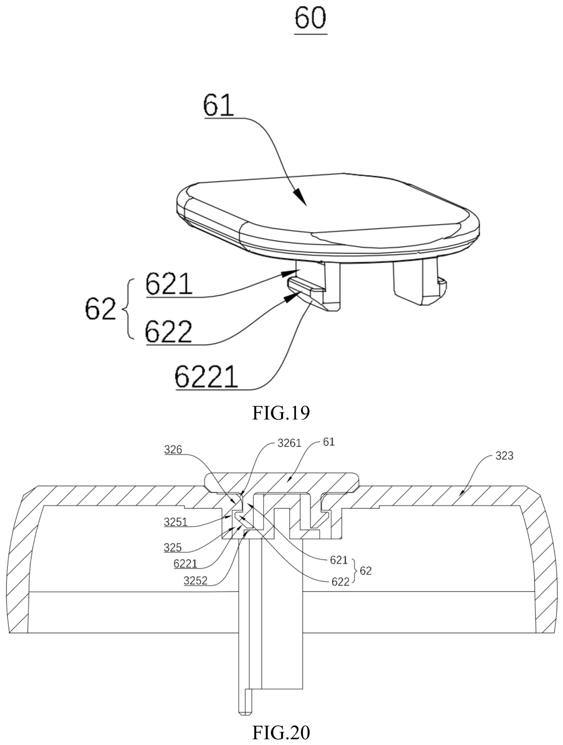

Please refer to FIGS. 4 and 19. FIG. 19 illustrates a schematic structural view of the shielding member 60 shown in FIG. 4 In at least one embodiment, as shown in FIGS. 4 and 19, the second housing part 32 defines a sliding groove 325 near the second lens hole 321. The camera assembly 100 may further include a shielding member 60. The shielding member 60 may include a shielding cover plate 61 and at least one sliding portion 62 connected to the shielding cover plate 61. The sliding portion 62 is located within the sliding groove 325 and can slide along the sliding groove 325. A radial dimension of the shielding cover plate 61 is greater than or equal to an aperture of the second lens hole 321. The shielding cover plate 61 is configured to cover or expose the second lens hole 321 when the sliding portion 62 slides along the sliding groove 325. In another embodiment, the sliding groove 325 is omitted, and the at least one sliding portion 62 is omitted, and the shielding cover plate 61 may be rotatably connected to the second housing part 32, and the shielding cover plate 61 is capable of being rotated to cover the second lens hole 321 or expose the second lens hole 321. Furthermore, a ridge is set on a rotation path of the shielding cover plate 61 on the second housing part 32 to prevent the shielding cover plate 61 from contacting with other parts of the second housing part 32 otherwise the ridge, thereby protecting the surface of the second housing part 32.

A surface of the shielding cover plate 61 facing away from the sliding portion 62 can be operated by the user to slide the shielding cover plate 61 and the sliding portion 62. By providing the shielding member 60, the user can choose whether the second camera structure 20 captures images of objects on the first light-transmitting side 201 based on actual needs. Additionally, the shielding cover plate 61 can cover the second lens hole 321 to prevent dust, dirt, and other impurities from adhering to the lens surface of the second camera structure 20, thereby improving the quality of images obtained during shooting, protecting the lens from external damage, and extending the service life of the second camera structure 20.

Please refer to FIG. 20. FIG. 20 illustrates a cross-sectional structural view of the shielding member 60 and the sliding groove 325 in accordance with at least one embodiment of the present disclosure. In at least one embodiment, as shown in FIG. 20, a side wall 3251 of the sliding groove 325 may include a first protrusion 326 extending along a direction parallel to a bottom wall 3252 of the sliding groove 325. The sliding portion 62 may include a sliding body 621 and a second protrusion 622. The sliding body 621 is connected to the shielding cover plate 61. The second protrusion 622 is located on one side of the sliding body 621 close to the first protrusion 326 and extends toward the first protrusion 326 to fit against the surface of the first protrusion 326 close to the bottom wall 3252 of the sliding groove 325. The side surface of the first protrusion 326 fits against the sliding body 621. The second protrusion 622 can slide along the surface of the first protrusion 326 close to the bottom wall 3252 of the sliding groove 325, and the sliding body 621 can slide along the side surface of the first protrusion 326.

Here, the first protrusion 326 can limit the position of the second protrusion 622, thereby preventing the sliding portion 62 from sliding out of the sliding groove 325.

As shown in FIG. 20, the side surface of the first protrusion 326 is formed with a first chamfer 3261. As shown in FIGS. 18 and 19, the second protrusion 622 is formed with a second chamfer 6221. When the sliding portion 62 is pressed into the sliding groove 325 to assemble the shielding member 60 and the rotating part 323, the first chamfer 3261 and the second chamfer 6221 facilitate the smooth insertion of the sliding portion 62 into the sliding groove 325.

Here, a surface of the second protrusion 622 close to the bottom wall 3252 of the sliding groove 325 may contact the bottom wall 3252 or have a small gap with the bottom wall 3252.

In at least one embodiment, as shown in FIGS. 1 to 4, the camera assembly 100 may further include a connecting member 70. The connecting member 70 is connected between the first housing part 31 and the light-transmitting carrier 200. The connecting member 70 may include a light-shielding portion 71. The light-shielding portion 71 defines a through hole 711. A projection of a hole wall of the through hole 711 on the light-transmitting carrier 200 surrounds a projection of a hole wall of the first lens hole 311 on the light-transmitting carrier 200 or coincides with the projection of the hole wall of the first lens hole 311 on the light-transmitting carrier 200. The light-shielding portion 71 is configured to block light from the first light-transmitting side 201 from entering the first camera structure 10, thereby avoiding imaging glare issues.

In at least one embodiment, the connecting member 70 may include at least one of hook-and-loop fasteners, adhesive, negative pressure structural members, or magnetic members.

In at least one embodiment, as shown in FIG. 4, the connecting member 70 may include a first connecting member 72 and a second connecting member 73 stacked in a direction perpendicular to the cover plate 313. One side of the first connecting member 72 facing away from the second connecting member 73 is connected to the cover plate 313, and one side of the second connecting member 73 facing away from the first connecting member 72 is connected to the first light-transmitting side 201 of the light-transmitting carrier 200.

In at least one embodiment, the first connecting member 72 or the second connecting member 73 may include the light-shielding portion 71.

In other embodiments, the light-shielding portion 71 may include a first light-shielding portion and a second light-shielding portion stacked in the direction perpendicular to the cover plate 313. The first light-shielding portion defines a first through hole, and the second light-shielding portion defines a second through hole. Regions surrounded by the projections of the hole walls of the first through hole and the second through hole on the light-transmitting carrier 200 in the direction perpendicular to the cover plate 313 at least partially overlap. The projections of the hole walls of the first through hole and the second through hole on the light-transmitting carrier 200 in the direction perpendicular to the cover plate 313 both surround the projection of the hole wall of the first lens hole 311 on the light-transmitting carrier 200 or coincide with the projection of the hole wall of the first lens hole 311 on the light-transmitting carrier 200. The first connecting member 72 may include the first light-shielding portion, and the second connecting member 73 may include the second light-shielding portion.

In at least one embodiment, the first connecting member 72 may include one of a hook surface or a loop surface of the hook-and-loop fastener, and the second connecting member 73 may include the other of the hook surface or the loop surface of the hook-and-loop fastener. The side of the first connecting member 72 facing the first housing part 31 is tightly attached to the first housing part 31 via adhesive. Pressure is applied to ensure the adhesive fully bonds, securing the first connecting member 72 firmly to the first housing part 31. The side of the second connecting member 73 facing the light-transmitting carrier 200 is adhered to the first light-transmitting side 201 via adhesive. Appropriate pressure is applied to ensure the second connecting member 73 is firmly attached to the light-transmitting carrier 200. The assembled camera assembly 100 is then brought close to the light-transmitting carrier 200.

The side of the first connecting member 72 facing the second connecting member 73 is one of the hook surface or the loop surface, and the side of the second connecting member 73 facing the first connecting member 72 is the other of the hook surface or the loop surface. By applying appropriate pressure, the hook surface and the loop surface fully engage, completing the mounting of the camera assembly 100 onto the light-transmitting carrier 200.

When disassembly is required, the hook surface and the loop surface are separated, allowing the camera assembly 100 to be removed from the light-transmitting carrier 200.

In other embodiments, when both the first connecting member 72 and the second connecting member 73 are hook-and-loop fasteners, they may be fixed to the cover plate 313 and the first light-transmitting side 201, respectively, by other means, such as screwing or riveting.

In at least one embodiment, the first connecting member 72 may include a first magnetic member, and the second connecting member 73 may include a second magnetic member. The first magnetic member and the second magnetic member are opposite poles of magnets and can attract each other. The first magnetic member is fixed to the first housing part 31, and the second magnetic member is fixed to the light-transmitting carrier 200. During mounting, under magnetic force, the two opposite poles automatically attract each other, aligning precisely and adhering tightly to complete the mounting. During disassembly, the first magnetic member and the second magnetic member are separated along a direction perpendicular to the magnetic force.

Additionally, with mounting methods such as hook-and-loop fasteners or magnetic attraction, if the camera assembly 100 is found to be misaligned on the light-transmitting carrier 200, there is no need to laboriously peel off adhesive and damage the bonding surface. Instead, the connection between the first connecting member 72 and the second connecting member 73 can be separated, the position of the camera assembly 100 adjusted to align the first camera structure 10 and the second camera structure 20 at the proper angle, and then reattached.

In at least one embodiment, the connecting member 70 may include adhesive, such as double-sided tape or glue. Adhesive may be applied to corresponding positions on the first housing part 31 and the light-transmitting carrier 200. The first housing part 31 and the light-transmitting carrier 200 are aligned and pressed together with appropriate pressure to complete the mounting of the camera assembly 100. For disassembly, a specialized solvent may be used to dissolve or weaken the adhesive, allowing the first housing part 31 to be separated from the light-transmitting carrier 200.

In at least one embodiment, the connecting member 70 may include a negative pressure structural member, such as a silicone suction cup. During mounting, the suction cup is aligned with the light-transmitting carrier 200 and pressed firmly to ensure tight contact with the first light-transmitting side 201 without gaps. As air is gradually expelled, a negative pressure forms between the connecting member 70 and the light-transmitting carrier 200, and under atmospheric pressure, the suction cup adheres tightly to the light-transmitting carrier 200, stably installing the camera assembly 100. For disassembly, external air can be introduced to balance the pressure, and once the negative pressure dissipates, the suction cup can be separated from the light-transmitting carrier 200 to remove the camera assembly 100.

With negative pressure adsorption installation, if the camera assembly 100 is misaligned on the light-transmitting carrier 200, there is no need to peel off adhesive. Instead, the connection between the suction cup and the light-transmitting carrier 200 can be separated, the camera assembly 100 re-positioned to align the first camera structure 10 and the second camera structure 20 at the proper angle, and then reattached.

The mounting methods of the camera assembly 100 onto the light-transmitting carrier 200 include but are not limited to hook-and-loop fasteners, magnetic attraction, adhesive, and negative pressure adsorption. The mounting method may be configured based on actual conditions and is not specifically limited here.

In at least one embodiment, the camera assembly 100 may further include functional components 80 located within the receiving space 33. The functional components 80 are connected to the circuit board 40. The circuit board 40 controls the functional components 80 to perform corresponding functions. The functional components 80 include one or more of a display assembly, an environmental parameter detector, a clocker, a microphone, a speaker, and peripheral ports.

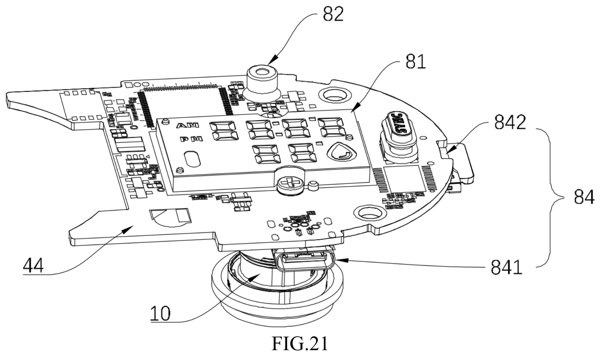

Please refer to FIGS. 4 and 21. FIG. 21 illustrates a schematic structural view of a first circuit board 44, a first camera structure 10, a display assembly 81, a speaker 83, and at least one peripheral port 84 as shown in FIG. 4. In at least one embodiment, as shown in FIGS. 4 and 21, the functional component 80 is connected to the first circuit board 44 and includes the display assembly 81, the microphone 82, the speaker 83, and the at least one peripheral port 84.

As shown in FIGS. 4 and 5, the display assembly 81 is connected to the second side of the circuit board 40 and spaced apart from the second camera structure 20. As shown in FIGS. 4, 7, and 8, the second housing part 32 defines a hollowed area 327. At least a portion of the display assembly 81 is embedded into the hollowed area 327, and the display surface of the display assembly 81 faces away from the second side 42 of the circuit board 40. Thus, when the camera assembly 100 is mounted on the carrier, the user can easily see the display surface of the display assembly 81 and the displayed information of the display assembly 81.

In at least one embodiment, the fixed portion 324 defines the hollowed area 327, and the display assembly 81 is located on one side of the first circuit board 44 facing away from the first camera structure 10.

In at least one embodiment, as shown in FIG. 4, the camera assembly 100 may further include an appearance member 95. The appearance member 95 defines a through hole 951 aligned with the opening 328. The appearance member 95 is snapped onto the side of the middle side plate 314 facing away from the cover plate 313. The appearance member 95 may include a second light-transmitting region 952. Orthogonal projection of the second light-transmitting region 952 on the fixed portion 324 coincides with or covers the hollowed area 327, allowing light from the display assembly 81 to pass through.

The display information of the display assembly 81 may include one or more of the time obtained by the clocker and environmental parameters detected by the environmental parameter detector. The environmental parameters include humidity and/or temperature.

As shown in FIGS. 4 and 21, the microphone 82 and the at least one peripheral port 84 are respectively connected to the different positions of the side edge of the first circuit board 44. The at least one peripheral port 84 may include a charging port 841 and a card slot 842.

In at least one embodiment, there are at least two first lens holes 311 and at least two first camera structures 10. The at least two first camera structures 10 are arranged in a direction perpendicular to the first direction. Each first camera structure 10 faces one first lens hole 311. The at least two first camera structures 10 can meet different shooting requirements.

In at least one embodiment, the arrangement direction of the at least two first camera structures 10 is parallel to the large surface of the cover plate 313. The large surface of the cover plate 313 is the surface with the largest area of the cover plate 313.

In at least one embodiment, the at least two first camera structures 10 have different focal length ranges. Thus, the camera assembly 100 can obtain clear images of both near and far objects on the second light-transmitting side 202.

In other embodiments, the at least two first camera structures 10 have the same focal length range but different fields of view, expanding the shooting range of the camera assembly 100 on the second light-transmitting side 202.

In at least one embodiment, there at at least two second lens holes 321, and at least two second camera structures 20. The at least two second camera structures 20 are arranged in a direction perpendicular to the first direction. Each second camera structure 20 faces one second lens hole 321.

In at least one embodiment, the arrangement direction of the at least two second camera structures 20 is parallel to the large surface of the cover plate 313.

In at least one embodiment, the at least two second camera structures 20 have different focal length ranges, enabling the camera assembly 100 to capture clear images of both near and far objects on the first light-transmitting side 201.

In other embodiments, the at least two second camera structures 20 have the same focal length range but different fields of view, expanding the imaging range of the camera assembly 100 on the first light-transmitting side 201.

The camera assembly 100 provided in the embodiments of the present disclosure can be applied in various scenarios, including photography, videography, medical imaging, machine vision, security, automotive electronics, drones, medical devices, etc.

The fixed connections mentioned in the embodiments of the present disclosure may be detachable or non-detachable.

In the above embodiments, the description of each embodiment has its own focus. For parts not detailed in a particular embodiment, may be made to the relevant descriptions in other embodiments.

The above describes the implementation of the embodiments of the present disclosure. It should be noted that, for those of ordinary skill in the technical field, without departing from the principles of the embodiments of the present disclosure, several improvements and refinements may be made, and such improvements and refinements shall also be regarded as within the protection scope of the present disclosure.

## Claims

1. A camera assembly (100), being configured to be fixed on one side of a carrier, wherein the camera assembly comprises a first camera structure (10) and a second camera structure (20), an imaging acquisition end of the first camera structure and an imaging acquisition end of the second camera structure face opposite directions.

2. The camera assembly according to claim 1, wherein: the carrier is a light-transmitting carrier; the camera assembly is configured to be fixed on a first light-transmitting side (201) of the light-transmitting carrier; the first camera structure is configured to capture images of objects on a second light-transmitting side (202) of the light-transmitting carrier through the light-transmitting carrier; and the second camera structure (20) is configured to capture images of objects on the first light-transmitting side of the light-transmitting carrier; the second light-transmitting side and the first light-transmitting side are opposite to each other.

3. The camera assembly according to claim 2, wherein: the camera assembly further comprises a housing (30); the housing comprises a first housing part (31) and a second housing part (32); the first housing part and the second housing part cooperatively form a receiving space (33); the first housing part is configured to be fixed on the first light-transmitting side (201) and defines a first lens hole (311) facing the light-transmitting carrier; the second housing part (32) is located on one side of the first housing part facing away from the light-transmitting carrier and defines a second lens hole (321);
the first camera structure is located within the receiving space; the first imaging acquisition end (11) of the first camera structure faces the first lens hole; the first camera structure is configured to capture images of objects on the second light-transmitting side (202) of the light-transmitting carrier through the first lens hole;
the second camera structure is located within the receiving space; the second imaging acquisition end (21) of the second camera structure faces the second lens hole; the second camera structure is configured to capture images of objects on the first light-transmitting side of the light-transmitting carrier through the second lens hole.

4. The camera assembly according to claim 3, wherein: the camera assembly further comprises a circuit board (40), the circuit board is located within the receiving space; the circuit board comprises a first side (41) and a second side (42) opposite to each other; the first camera structure and the second camera structure are respectively mounted on the first side and the second side of the circuit board; the circuit board at least comprises an image processing circuit, the image processing circuit is configured to process image signals captured by the first camera structure and the second camera structure.

5. The camera assembly according to claim 4, wherein: the circuit board comprises a first circuit board (44) and a second circuit board (45) spaced from the first circuit board; an arrangement direction of the first camera structure and the first circuit board , as well as an arrangement direction of the second camera structure and the second circuit board, are both parallel to a first direction;
the first imaging acquisition end of the first camera structure is mounted in the first lens hole, and one end of the first camera structure opposite to the first imaging acquisition end is connected to the first circuit board, the first circuit board is fixed to the first housing part;
the second imaging acquisition end of the second camera structure is mounted in the second lens hole, and one end of the second camera structure opposite to the second imaging acquisition end is connected to the second circuit board, the second circuit board is fixed to the second housing part;
the first direction is an arrangement direction of the first housing part and the second housing part.

6. The camera assembly according to claim 5, wherein: a distance between the first circuit board and the first housing part is greater than a distance between the second circuit board and the first housing part.

7. The camera assembly according to claim 5, wherein: the first circuit board comprises the image processing circuit, the second circuit board is at least configured to transmit the image signals captured by the second camera structure to the image processing circuit; or, the second circuit board comprises the image processing circuit, first image sensor, the first circuit board is at least configured to transmit the image signals captured by the first camera structure to the image processing circuit; or, the image processing circuit comprises a first image processing circuit and a second image processing circuit; the first circuit board comprises the first image processing circuit, and the second circuit board comprises the second image processing circuit, and the first image processing circuit is configured to process the image signals captured by the first camera structure, and the second image processing circuit is configured to process the image signals captured by the second camera structure.

8. The camera assembly according to claim 3, wherein: the second housing part comprises a first light-transmitting area (322); the camera assembly further comprises a light board (50) located within the receiving space; the light board is sleeved on the second camera structure, and a light-emitting side of the light board faces the first light-transmitting area; light rays emitted by the light board passes through the first light-transmitting area to illuminate one side of the second housing part away from the first housing part.

9. The camera assembly according to claim 3, wherein: the first housing part comprises a housing body (312) and a first connecting part (91); the second housing part comprises a rotating part (323), the rotating part comprises a rotating body (3231) and a second connecting part (92); the first connecting part is rotatably connected to the second connecting part; the second camera structure is fixedly connected to the rotating body; a rotation of the rotating part relative to the first housing part drives the second camera structure to rotate relative to the first housing part, to change a viewing angle of the second camera structure.

10. The camera assembly according to claim 3, wherein: the first housing part comprises a cover plate (313) and a middle side plate (314); the middle side plate is connected to a periphery of the cover plate and is located on a first side of the cover plate along a thickness direction of the cover plate; the second housing part is located on one side of the middle side plate facing away from the cover plate; a second side of the cover plate along the thickness direction of the cover plate is configured for fixed connection with the light-transmitting carrier; the first lens hole is defined on the cover plate; projections of the first camera structure and the second camera structure on the cover plate are spaced apart or partially overlap.

11. The camera assembly according to any one of claims 3~10, wherein: the second housing part defines a sliding groove (325) near the second lens hole; the camera assembly further comprises a shielding member (60); the shielding member comprises a shielding cover plate (61) and at least one sliding portion (62) connected to the shielding cover plate; the sliding portion is located within the sliding groove and is capable of sliding along the sliding groove; a radial dimension of the shielding cover plate is greater than or equal to an aperture of the second lens hole; the shielding cover plate is configured to cover or expose the second lens hole when the sliding portion slides along the sliding groove; or, the camera assembly further comprises a shielding member (60); the shielding member comprises a shielding cover plate (61) rotatably connected to the second housing part, and the shielding cover plate (61) is capable of being rotated to cover the second lens hole or expose the second lens hole.

12. The camera assembly according to claim 11, wherein: a side wall of the sliding groove comprises a first protrusion (326) extending along a direction parallel to a bottom wall of the sliding groove; the sliding portion comprises a sliding body (621) and a second protrusion (622); the sliding body is connected to the shielding cover plate; the second protrusion is located on one side of the sliding body close to the first protrusion and extends toward the first protrusion to fit against a surface of the first protrusion close to the bottom wall of the sliding groove; a side surface of the first protrusion fits against the sliding body; the second protrusion is capable of sliding along the surface of the first protrusion close to the bottom wall of the sliding groove, and the sliding body is capable of sliding along the side surface of the first protrusion.

13. The camera assembly according to any one of claims 3~10, wherein: the camera assembly further comprises a connecting member (70); the connecting member is connected between the first housing part and the light-transmitting carrier; the connecting member comprises a light-shielding portion (71); the light-shielding portion defines a through hole (711); a projection of a hole wall of the through hole on the light-transmitting carrier surrounds a projection of a hole wall of the first lens hole on the light-transmitting carrier or coincides with the projection of the hole wall of the first lens hole on the light-transmitting carrier; the light-shielding portion is configured to block light from the first light-transmitting side from entering the first camera structure; and wherein the connecting member comprises at least one of hook-and-loop fasteners, adhesive, negative pressure structural members, or magnetic members.

14. The camera assembly according to claim 4, wherein: the camera assembly further comprises functional components (80) located within the receiving space; the functional components are connected to the circuit board; the circuit board is configured to controls the functional components to perform corresponding functions; the functional components comprises one or more of a display assembly, an environmental parameter detector, a clocker, a microphone, a speaker, and peripheral ports.

15. The camera assembly according to claim 3, wherein: there are at least two of the first lens holes and at least two of the first camera structures; the at least two first camera structures are arranged in a direction perpendicular to the first direction; each first camera structure faces a respective one of the at least two first lens holes, the first direction is an arrangement direction of the first housing part and the second housing part; or, there are at least two of the second lens holes and at least two of the second camera structures; the at least two second camera structures are arranged in a direction perpendicular to the first direction; each second camera structure faces a respective one of the at least second first lens holes, the first direction is an arrangement direction of the first housing part and the second housing part.
